# EUROPEAN PATENT SPECIFICATION

(11) **EP 2 163 308 B1**
(45) Date of publication and mention of the grant of the patent: **16.05.2012**
(21) Application number: 09169308.5
(22) Date of filing: 03.09.2009
(51) Int. Cl.: B01L 3/00, B01J 19/00

(54) **Method of heating liquid medium using microwaves and anions**
Verfahren zum Erhitzen eines flüssigen Mediums unter Verwendung von Mikrowellen und Anionen
Procédé de chauffage d'un milieu liquide à l'aide de micro-ondes et d'anions

(30) Priority: 03.09.2008 KR 20080086711
(43) Date of publication of application: 17.03.2010
(73) Proprietor: Samsung Electronics Co., Ltd., Suwon-si, Gyeonggi-do (KR)
(72) Inventor: Hwang, Kyu-youn, Gyeonggi-do (KR); Kim, Joon-ho, Gyeonggi-do (KR); Namkoong, Kak, Gyeonggi-do (KR); Chung, Won-seok, Gyeonggi-do (KR); Lim, Hee-kyun, Gyeonggi-do (KR)
(74) Representative: Grünecker, Kinkeldey, Stockmair & Schwanhäusser

(56) References cited:
- EP-A- 1 900 433
- EP-A- 1 955 770
- EP-A- 1 980 316
- WO-A-00/72956
- WO-A-01/73399
- US-A1- 2003 143 114
- US-A1- 2004 209 303
- US-B1- 6 572 830

## Description

### BACKGROUND

### 1. Field

One or more embodiments relate to a method of heating a liquid medium using microwaves, and more particularly, to a method of heating the liquid medium comprising anions by using microwaves.

### 2. Description of the Related Art

Analysis on clinical or environmental samples is performed via a series of biochemical, chemical, and mechanical processes. Recently, a technology that involves reacting a biological sample on a chip or disk has been used for analyzing and detecting desired biomolecules. This technique is regarded as having tremendous potential for analyzing different types of chemicals and reactions.

In addition, a nucleic acid based molecule diagnosing method has excellent accuracy and sensitivity, and thus is widely used in pharmacogenomics or in diagnosing infectious diseases such as cancers.

However, in order to diagnose a desired molecule, the target molecule to be detected and analyzed is to be separated from a biological sample and then purified in a pretreatment process, for example, an amplification process, such as a polymerase chain reaction ("PCR"). An important process for extracting the biomolecule includes lysing a target cell and purifying biomolecules derived therefrom.

In order to accomplish the separation, a molecule extraction kit manufactured by QIAGEN or MOLZYM is used to sequentially perform a series of operations, such as a cell lysing process, a deoxyribonucleic acid ("DNA") capturing process, a washing process, and a DNA discharging process, while performing a separate heating process during a corresponding operation. However, the molecular recovery rate is very low and it is difficult to control the various operations listed above.

The various operations listed above may be automatically performed in a microfluidic apparatus. The microfluidic apparatus is also heated in order to automatically extract a biomolecule. The heating is also desirable when lysing a cell. This heating is advantageous when nucleic acid is heated during elution after binding the nucleic acid to a solid material. Heating increases nucleic acid separating efficiency.

Heating is generally accomplished by resistive heating where an electrical current is passed through the body that is to be heated. However when the resistive heating method is used in a microfluidic apparatus that contains a plurality of microfluidic parts and structures, the method of controlling the heat in different parts of the microfluidic structure becomes complicated. To effectively control heating, a heater may be built inside the microfluidic apparatus or may be mechanically constructed to contact the system from the outside. In addition, since microfluidic apparatus are mostly made out of plastic, heating efficiency decreases and the amount of time used for heating the parts of the apparatus to a desired temperature increases.

Document US 2004/209303 A1 relates to a method and composition for directed microwave chemistry, wherein reactions can be accelerated using microwave energy. A reagent found to be most suitable for directed microwave detection includes 100 mM NaHCO₃.

Document WO 00/72956 A relates to the preparation and the use of ionic liquids in microwave assisted chemical transformations resulting in reduced reaction times. Ionic liquids are used as an additive or co-solvent and allow for heating by microwave assistance.

Document WO 01/73391 A relates to a device and methods for automated specimen processing, wherein the device comprises a microwave unit for heating purposes, for example, for antigene retrieval. Microwave heating may be carried out in an aqueous solution comprising at least one component which results in increased recovery of antigen in a specimen when heated with microwave radiation. The antigen retrieval solution may comprise, for example, citrate salts.

### SUMMARY

The invention provides a method according to independent claim 1 and a biological analysis device according to independent claim 5. Preferred embodiments are defined in the dependent claims.

### BRIEF DESCRIPTION OF THE DRAWINGS

The above and other aspects, advantages and features of the invention will become more apparent by describing in further detail exemplary embodiments thereof with reference to the attached drawings, in which:

FIG. 1 is a conceptual diagram for explaining the principle of dielectric heating;

FIG 2 is an exemplary frontal schematic diagram illustrating a microfluidic device;

FIG 3 is a graph showing average heating temperatures according to types of anions in Experimental Example 1;

FIG. 4 is a graph showing average heating temperatures according to anion charge densities in Experimental Example 2; and

FIG 5 is a graph showing average heating temperatures according to concentrations of anions in Experimental Example 3 t.

### DETAILED DESCRIPTION OF THE EMBODIMENTS

Reference will now be made in detail to embodiments, examples of which are illustrated in the accompanying drawings. In this regard, the present embodiments may have different forms and should not be construed as being limited to the descriptions set forth herein. Accordingly, the embodiments are merely described below, by referring to the figures, to explain aspects of the present description.

The invention now will be described more fully hereinafter with reference to the accompanying drawings, in which various embodiments are shown. This invention may, however, be embodied in many different forms, and should not be construed as limited to the embodiments set forth herein. Rather, these embodiments are provided so that this disclosure will be thorough and complete, and will fully convey the scope of the invention to those skilled in the art. Like reference numerals refer to like elements throughout.

It will be understood that when an element is referred to as being "on" another element, it can be directly on the other element or intervening elements may be present therebetween. In contrast, when an element is referred to as being "directly on" another element, there are no intervening elements present. As used herein, the term "and/or" includes any and all combinations of one or more of the associated listed items.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of the present invention.

The terminology used herein is for the purpose of describing particular embodiments only and is not intended to be limiting. As used herein, the singular forms "a," "an" and "the" are intended to include the plural forms as well, unless the context clearly indicates otherwise. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another elements as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The exemplary term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The exemplary terms "bellow" or "beneath" can, therefore, encompass both an orientation of above and below.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

The transition phrases such as including or comprising may be replaced with the transition phrases "consisting of and "consisting essentially of", as and when the Applicants desire.

When detailed research was conducted about non-contact type methods of heating a liquid medium containing hydrogen bonds between the molecules of the medium, it was found that the heating rate increases when anions having a high charge density are added to the medium, the anions accelerating polarization of the medium molecules, for example, polar molecules.

In one embodiment, the liquid medium may be heated by adding anions having high charge density that accelerates the polarization of the molecules in the liquid medium. The liquid medium including the anions is then heated by irradiating it with microwaves. By using this method, the heating rate of the liquid medium may be increased significantly. Here, the anions may interact with the molecules of the liquid medium with a force that is stronger than the forces that produce hydrogen bonding between the molecules of the medium.

A method according to an embodiment includes adding anions having high charge density to the liquid medium. The molecules of the liquid medium can undergo hydrogen bonding with one another. The anions interact with the molecules of the liquid medium with a force that is stronger than the forces that produce hydrogen bonding between the molecules of the medium.

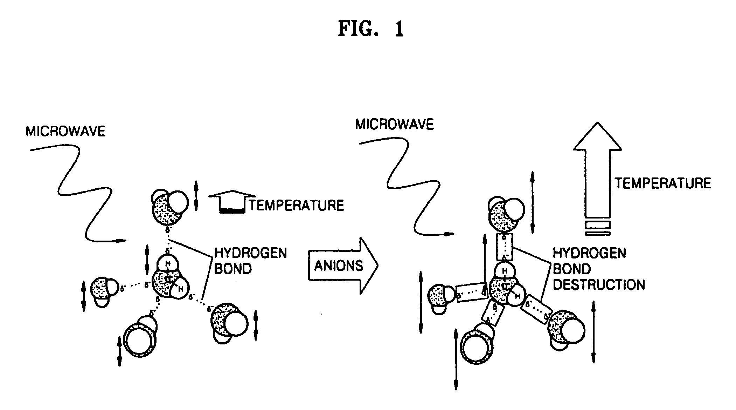

FIG 1 is a conceptual diagram for explaining the principles of heating molecules with radiation including microwaves. Referring to FIG 1, when microwaves are applied to a liquid medium containing the anions having a high charge density, the anions accelerate polarization of the medium molecules, thereby contributing to breakage of the hydrogen bond between the medium molecules. Accordingly, the heating rate of the liquid medium is increased.

In one embodiment, heating is conducted by irradiating the liquid medium with high-frequency microwaves. One or more embodiments include a method of heating an object via an indirect, non-contacting method, by heating a medium or an object included in the liquid medium.

For example, when the medium is water, microwaves having a frequency similar to the resonance frequency of water are applied to heat the liquid medium. The water medium molecules undergo resonance with the microwaves, thereby absorbing wave energy. Consequently, the molecules of the liquid medium rotate and thus generate frictional heat. As a result, a heating effect is realized, which increases the temperature of the liquid medium.

In other words, when an electrostatic field (direct current) is applied to polar water molecules, hydrogen having a positive charge is aligned towards a cathode, and oxygen having a negative charge is aligned towards an anode. Hence, when an alternating current (AC) electric field is applied (i.e., wherein a direction of the applied electric field changes instantaneously), the water molecules that were aligned are realigned while rotating according to the direction of the electric field. During such realignment, the water molecules produce friction, thereby generating heat.

The microwaves used in embodiments may have similar frequencies to the frequency used in dielectric heating of a sample. The frequency of the microwaves may be about 300 MHz to about 300 GHz, about 300 MHz to about 30 GHz, or about 1 GHz to about 30 GHz.

A device for generating the microwaves is not limited, and any well-known device may be used, such as an electron tube, a klystron, a magnetron, a waveguide, or a laser.

According to an embodiment, the medium may be water, an aqueous solution, organic solvent, a buffer solution, or a combination comprising at least one of the foregoing fluids. The medium may be present in a "microfluid" volume having a volume of several nano liters to hundreds of micro liters. The liquid medium is one where the molecules can form a hydrogen bond with one another. For example, the molecule may contain a hydrogen atom bonded to an atom selected from the group consisting of nitrogen, oxygen and fluorine. The molecule includes water, alcohols such as methanol, ethanol, propanol, and the like; ammonia, methyl amine, hydrogen fluoride ("HF"), and the like.

If a liquid medium is an organic material, the liquid medium may be heated via jacket type or bath type heating by heating a container containing the liquid medium through heating the jacket or bath with microwave irradiation, while the container is being surrounded by a jacket or bath containing a solution containing anions having high charge density.

Anions having a high charge density are added to a liquid medium in order to increase the heating rate.

The anions having a high charge density interact with the molecules of the liquid medium with a force that is stronger than the forces that produce hydrogen bonding between the molecules of the medium. or may be anions that can weaken or destroy the hydrogen bonds between the medium molecules.

In other words, the concept of "high charge density" may be considered in terms of a relationship between the molecules of the liquid medium. Accordingly, the anions having a high charge density may have entropy of hydration of greater than or equal to about 6.3 KJ/mol.

As described above, when the anions having high charge density are added to the liquid medium, such as, for example, a dielectric substance, the anions form a stronger interaction with the molecules of the liquid medium than the hydrogen bonding that occurs between the medium molecules, i.e., the anions form an attraction force between anion-positive dipoles. Accordingly, a three-dimensional structure generated by the hydrogen bond is weakened or destroyed.

For example, when the medium is water, the strength of the hydrogen bonds between the water molecules is 6.3 KJ/mol, whereas an energy of hydrating the anions having high charge density, such as sulfate ions (SO₄²⁻), in water is 46 KJ/mol. Such energies generally increase as the charge density increases.

According to the invention, the anions having high charge density may be one of sulfate ions (SO₄²⁻), hydrogen sulfate ions (HSO₄⁻), phosphate ions (PO₄³⁻), hydrogen phosphate ions (HPO₄²⁻), carbonate ions (CO₃²-), hydrogen carbonate ions (HCO₃⁻), or a combination comprising at least one of the foregoing ions. Examples of suitable anions are sulfate ions (SO₄²⁻).

The anions may be added in a form of a salt and an ionic compound including the anions. Cations for forming the salt may be H⁺, Na⁺, NH₄⁺, K⁺, Li⁺, Mg²⁺, Ca²⁺, or the like, and the ionic compound may be sodium dodecyl sulfate (SDS), sodium octyl sulfate, or the like, or a combination comprising at least one of the foregoing ionic compounds. The cations and the ionic compound are not limited thereto.

As such, heating methods using microwaves and the anions may be variously used in order to heat a material with or without direct contact with the microwave generator, like heating an organic solvent in a bath or drying moisture from a substance.

In detail, the heating method according to the current invention includes preparing a chamber for a biological analysis device, wherein the chamber contains a liquid medium whose molecules can undergo hydrogen bonding; adding anions having high charge density to the chamber, wherein the anions interact with molecules of the liquid medium. The liquid medium including the anions is then heated using microwaves. As noted above, the anions interact with the molecules of the liquid medium with a force that is stronger than the forces that produce hydrogen bonding between the molecules of the liquid medium.

The biological analysis device contains a liquid medium containing a hydrogen bond between the molecules of the liquid medium. The biological analysis device is a device for diagnosing or monitoring a biological sample or a device for analyzing and detecting a biomolecule. The biological analysis device may be a microfluidic device including a microfluidic structure containing a microfluid having a volume of about several nano liters to hundreds of micro liters, a microfluidic cartridge a lab-on-a chip, or a lab-on-a disc.

Also, the amount and type of the biological sample are not limited as long as the biological sample includes biomolecules. The biological sample may be a cell suspension including microorganisms, blood, urine, saliva of a living being including human beings, or the like. The biomolecule may vary according to the purpose of the analysis, and may be a nucleic acid, i.e., DNA or RNA, protein, a peptide, an enzyme, an antibody, a nucleotide, an oligonucleotide, an antigen, an enzyme substrate, an enzyme inhibitor, a transition state analog of an enzyme substrate or a combination thereof..

The biological analysis device using microfluid may perform a preprocess operation on a biological sample. Examples of such preprocess operations are amplification processes, a polymerase chain reaction (PCR) amplifying operation, an electrophoresis operation, a sensing operation, or combination of such operations. Here, the preprocess operation determines completion of a molecule diagnosis. The biomolecules are separated during the preprocess operation. Examples of suitably separations are those that separate red blood cells and leukocytes from blood, heterogeneous material separation that separates DNA, RNA, or protein from various materials in a cytoplasm, and congener separation that separates a certain DNA from DNAs having various lengths.

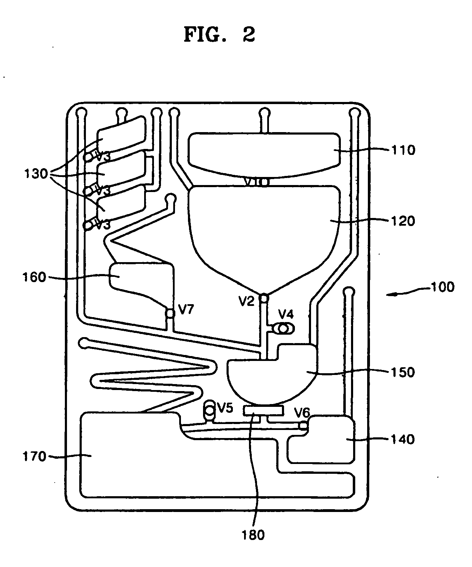

FIG. 2 is a frontal schematic diagram illustrating a microfluidic device 100. Referring to FIG. 2, the microfluidic device 100 analyzes a small amount of sample, and includes micro components for processing a fluid. Examples of the micro components include a channel, a pump, a plurality of micro-reaction chambers, an electrophoresis module, a micro channel, a fluid storage unit, a detector, a valve, and a mixer. All of the micro components are in fluid communication with one another. Here, the term "micro" is not limited to a micron or microliter, but may also refer to a nanometer or nanotiter,or millimeter or milliliter.

The biological analysis device for performing a series of sample preprocess operations includes a plurality of chambers. Each chamber includes microfluid that flows inside the chamber and between chambers due to mechanical driving power.

Referring to FIG 2, the plurality of chambers include a lysis solution chamber 110 for storing a solution which lyses cells in a biological sample so as to extract a desired biomolecule from the biological sample injected into the biological analysis device, a binding solution chamber 120 which is connected to the lysis solution chamber 110 for storing a solution which binds the biomolecule discharged from the lysed cell to a solid material, a washing solution chamber 130 for storing a solution which washes and removes materials that are not bound to the solid material, excluding the biomolecule to be analyzed, and an eluate solution chamber 140 for storing a solution containing the biomolecule eluted from the solid material. A chamber for solid material collection 150 is connected to a binding solution chamber 120 containing a solid material and may receive the solid material from the chamber 120 and a chamber for storing an elution solution 160 is connected to the chamber 150 from the upstream side and waste chamber 170 is connected to the chamber 150 from the downstream side and stores the wastes. A filter 180 is located in fluid path between the chamber 150 and waste chamber 170 or eluate chamber 140. Each chamber is connected to the other chambers by a channel that acts as a fluid path between the chambers, and valves V1, V2, V3, V4, V5, V6, and V7 adjust opening/closing of the corresponding channels.

Some chambers need to be heated so as to efficiently perform molecule extraction processes according to a series of reactions in each chamber. The lysis solution chamber 110 may be heated to heat the lysis solution therein, and the heated lysis solution may be used to efficiently lyse and disrupt cell membranes in the biological sample by contacting the heated lysis solution with the cells. The elution solution chamber 160 may be heated to heat the elution solution therein, and the heated elution solution may be used to efficiently separate the biomolecule from the solid material by contacting the heated elution solution to the solid material bound with a biomolecule in the chamber 150. The solid material may be any solid material known to bind a biomolecule such as nucleic acid, protein, or a carbohydrate. The solid material includes silica-based materials known to bind nucleic acid. The solid material may be a solid material contained in a commercially available biomolecule extraction kit such as a nucleic acid, protein and/ or carbohydrate extraction kit, for example, from QIAGEN, INVITROGEN Inc, and the like. The heated lysis solution and elution solution may be transported to the lysis chamber and/or elution chamber containing the solid material bound with a biomolecule such as nucleic acid, protein, and carbohydrate. However, the binding solution chamber 120 and the washing solution chamber 130 may not be heated, because when they are heated, the biomolecule may be lost. Accordingly, only some of the chambers are heated.

According to an embodiment, a desired chamber is selectively and quickly heated by adding anions having high charge density that accelerate polarization of the molecules of the liquid medium, thereby reducing difficulties of organizing and controlling a system caused by a resistance heating method and reducing the heating time.

The adding amount of the anions having high charge density is not limited, and is controlled according to types of a cell and a biomolecule, concentration of a biological sample, and type of used anions, while performing desired cell lysing and biomolecule elution processes.

However, when the adding amount of the anions is too small, the heating rate may not reach expectations, and when the adding amount of the anions is excessive, stability may deteriorate as it may be difficult to use extracted biomolecules due to excessive evaporation of the biological sample. Accordingly, the the anions may be added in amounts of about 10 mM to about 10 M, specifically in amounts of about 100 mM to about 3M.

The anions may be added in an ionic salt form via an inlet port of each chamber, and the mobility of the anions is controlled by the valves V1 through V7 that control mobility of fluid between the chambers.

The biomolecule obtained through such molecule extraction processes is later detected and analyzed after being amplified through a process such as PCR.

Aside from the use in separating and purifying desired nucleic acid molecules by selectively heating the chambers as described above, the heating method, which is used to selectively and quickly heat required sections of the biological analysis device, may be used during an inactivation process that cleaves proteins and peptides (by using protease enzymes) into fragments, a denaturation process of enzyme or protein/peptide, a processing or incubating process of a protein-protein complex, a nucleic acid-protein complex, a nucleic acid-nucleic acid complex, or a complex of one of the biomolecules and a drug or organic/inorganic compound.

As described above and by the claims, the biological analysis device is a device for detecting and analyzing a biomolecule, and includes a plurality of chambers for performing a series of operations to extract a biomolecule. The anions having high charge density are contained in some of the plurality of chambers. Accordingly, desired chambers are quickly heated by selectively applying microwaves thereto.

The anions having high charge density that accelerates polarization of molecules of the liquid medium may be added to chambers that need to be heated, such as the lysis solution chamber 110 and/or the elution solution chamber 160 of FIG 2. The anions having high charge density may be one of, sulfate ions (SO₄²⁻), hydrogen sulfate ions (HSO₄⁻), phosphate ions (PO₄³⁻), hydrogen phosphate ions (HPO₄²⁻), carbonate ions (CO₃²⁻), hydrogen carbonate ions (HCO₃⁻), or a combination comprising at least one of the foregoing ions.

Meanwhile, anions having low charge density may be added to chambers that do not need to be heated. For example, anions having low charge density may be directly added to the binding solution chamber 120 and the washing solution chamber 130 of FIG. 2 in an ionic salt form, so as to prevent deterioration of a molecule recovery rate. The anions having low charge density may be one of acetic acid ions (acetate⁻), chloride ions (Cl⁻), nitrate ions (NO₃⁻), bromide ions (Br⁻), chloric ions (ClO₃⁻), iodides (I⁻), perchlorate ions (ClO₄⁻), thiocyanate ions (SCN⁻), or a combination comprising at least one of the foregoing low charge density anions.

According to an embodiment, there is provided a dielectric substance for dielectric heating, the dielectric substance including a medium that emits heat as a hydrogen bond between medium molecules is weakened by microwaves, and anions having high charge density that interact with the molecules of the liquid medium. As noted above, the anions being added interact with the molecules of the liquid medium with a force that is stronger than the forces that produce hydrogen bonding between the molecules of the medium.. The medium may be water, an aqueous solution, organic solvent, or a buffer solution.

**Example 1**

**1-1. Preparing Anions having High Charge Density**

Salts (sodium carbonate, sodium phosphate (dibasic), sodium sulfate, and sodium citrate) including anions having high charge density were each dissolved in distilled water in a concentration of 100 millimolar ("mM") to prepare aqueous solutions. Then, 1 milliliter ("ml") of each aqueous solution was separately put into a micro tube.

**1-2. Irradiating Microwave**

The aqueous solutions were irradiated with microwaves including the anions having high charge density prepared in 1-1 above for 10 seconds in a commercial microwave oven. The microwaves have a frequency of 2.45 GHz.

**Comparative Example 1**

1-1 and 1-2 were performed in the same manner as Example 1. except that 1 ml aqueous solutions were prepared by mixing distilled water with each of sodium chloride, sodium acetate, and N-cyclohexyl-3-aminopropanesulfonic acid (CAPS) (as zwitterions) to have a concentration of 100 mM.

**Experimental Example 1**

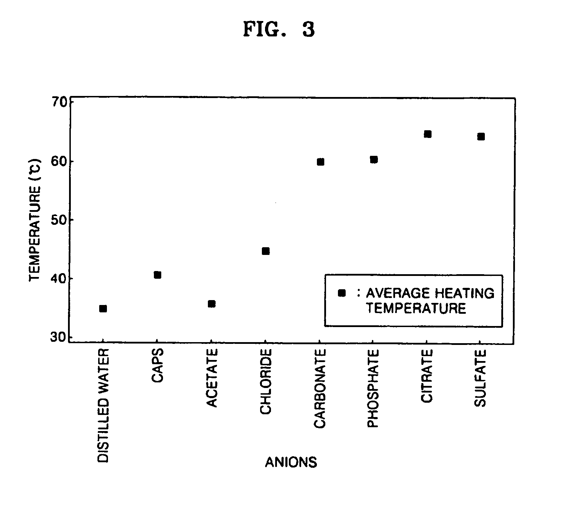

Average temperatures and heating rates according to dielectric heating in Example 1 and Comparative Example 1 were measured, and the results are shown in Table 1 and FIG 3.

**Table 1**

| | Type of Aqueous Solution | Average Temperature (°C) | Heating Rate (°C/sec) |
|---|---|---|---|
| Example 1 | Sodium Citrate | 64.7 | 6.5 |
| | Sodium Sulfate | 64.3 | 6.4 |
| | Sodium Phosphate (Dibasic) | 60.3 | 6.0 |
| | Sodium Carbonate | 60.0 | 6.0 |
| Comparative Example 1 | Sodium Chloride | 44.7 | 4.5 |
| | Sodium Acetate | 36.0 | 3.6 |
| | CAPS | 40.7 | 4.1 |
| | Distilled Water | 35.0 | 3.5 |

Referring to Table 1 and FIG. 3, the aqueous solutions including the anions having high charge density, i.e. the aqueous solutions including sodium citrate, sodium sulfate, sodium phosphate (dibasic), and sodium carbonate, were quickly heated in 10 seconds to a temperature that is about 25° (higher than the aqueous solutions including sodium chloride and sodium acetate, which are ionic salts having low charge density, and CAPS, which is a zwitterionic compound. Zwitterionic compounds include the same amount of positive and negative charges. Also, the aqueous solutions of Example 1 were heated about 30° higher than distilled water.

**Example 2**

1-1 and 1-2 were performed in the same manner as Example 1, except that 1 ml aqueous solutions were prepared by mixing distilled water with each of sodium phosphate (monobasic), sodium phosphate (dibasic), and sodium phosphate (tribasic) to have a concentration of 100 mM.

**Experimental Example 2**

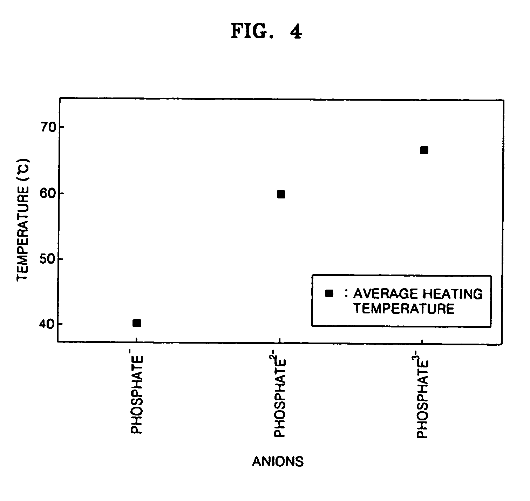

Average temperatures and heating rates of the aqueous solutions prepared in Example 2 according to dielectric heating were measured, and the results are shown in Table 2 and FIG 4.

**Table 2**

| | Type of Aqueous Solution | Average Temperature (°C) | Heating Rate (°C/sec) |
|---|---|---|---|
| Example 2 | Sodium Phosphate (Tribasic) | 67.0 | 6.7 |
| | Sodium Phosphate (Dibasic) | 60.3 | 6.0 |
| | Sodium Phosphate (monobasic) | 40.3 | 4.0 |

Referring to Table 2 and FIG 4, sodium phosphates, which are salts including phosphate ions as anions having high charge density, were heated. Tribasic, dibasic, and monobasic sodium phosphates were used. As a result, as the ion charge density increased, heating rate was increased.

**Example 3**

1-1 and 1-2 were performed in the same manner as Example 1, except that sodium dodecyl sulfates (SDSs) were prepared in various concentrations in 1-1 as shown in Table 3 below.

**Comparative Example 2**

1-1 and 1-2 were performed in the same manner as Example 1, except that 1 ml distilled water was prepared in 1-1.

**Experimental Example 3**

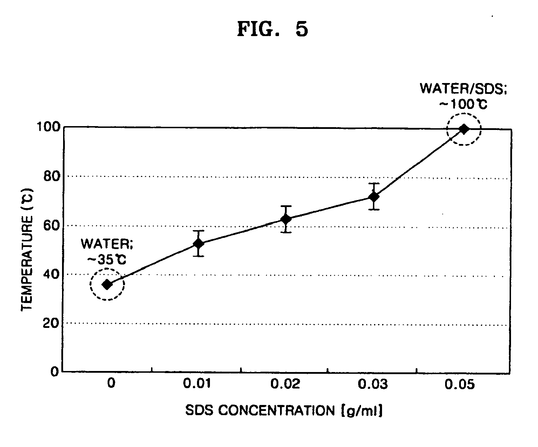

Average temperatures according to dielectric heating performed in Example 3 and Comparative Example 2 were measured, and results are shown in Table 3 and FIG 5.

**Table 3**

| | Type of Aqueous Solution | Average Temperature (°C) | Heating Rate (°C/sec) |
|---|---|---|---|
| Example 3 | SDS 0.01 g/ml | 50.0 | 5.0 |
| | SDS 0.02 g/ml | 61.0 | 6.1 |
| | SDS 0.03 g/ml | 70.0 | 7.0 |
| | SDS 0.05 g/ml | 100.0 | 10.0 |
| Comparative Example 2 | Distilled Water | 35.0 | 3.5 |

Referring to Table 3 and FIG. 5, SDSs including anions having high charge density were heated while differentiating the concentration from 0.01 to 0.05 g/ml, and the heating rate increased as the concentration increased. Specifically, in the case of 0.05 g/ml, the heating temperature increased up to 100°C in 10 seconds.

In other words, by suitably adjusting the concentration of anions having high charge density and the time of irradiating the microwaves, heating may be performed selectively within a short time.

As described above, according to the one or more of the above embodiments, a heating method using microwaves quickly and selectively heats only desired substances by adding anions having high charge density that accelerate polarization of molecules in the desired dielectric substances.

Also, while heating a biological analysis device including a plurality of chambers containing a fluid, only desired chambers are selectively and quickly heated.

## Claims

1. A method comprising:
adding anions having high charge density to a liquid medium; the liquid medium comprising molecules that hydrogen bond with one another; the anions interacting with the molecules of the liquid medium with a force that is stronger than the forces that produce hydrogen bonding between the molecules of the medium;
disposing the liquid medium in a chamber of a biological analysis device, the biological analysis device being any one of a microfluidic device, a microfluidic cartridge, a lab-on-a chip, and a lab-on-a disc; and
heating the chamber by heating the liquid medium by irradiating it with microwaves;
**characterized in that**
the anions having a high charge density are selected from the group consisting of sulfate ions (SO₄²⁻), hydrogen sulfate ions (HSO₄⁻), phosphate ions (PO₄³⁻), hydrogen phosphate ions (HPO₄²⁻), carbonate ions (CO₃²⁻), and a combination comprising at least one of the foregoing anions having a high charge density.

2. The method of claim 1, wherein the liquid medium comprises any one of water, an aqueous solution, organic solvent, a buffer solution, or a combination thereof.

3. The method of one of claims 1 to 2, wherein the anions having high charge density are added in a concentration of about 100 millimolar (mM) to about 3 molar (M),

4. The method of one of claims 1 to 3, wherein the microwaves have a frequency of about 300 MHz to about 30 GHz.

5. The method of any one of claims 1 to 4, wherein the biological analysis device comprises a plurality of chambers (110, 120, 130, 140, 150, 160, 170) for processing, removing, or reacting a sample.

6. The method of any one of claim 1 to 5, wherein the anions having high charge density are added to chambers that are required to be heated from among the plurality of chambers.

7. The method of claim 5 or 6, further comprising anions having low charge density, which are added to chambers that are not required to be heated from amongst the plurality of chambers.

8. The method of claim 7, wherein the anions having low charge density comprise at least one selected from the group consisting of acetic acid ions (acetate-), chloride ions (Cl⁻), nitrate ions (NO₃⁻), bromide ions (Br⁻), chloric ions (ClO₃⁻), perchloric ions (ClO₄⁻), iodides (I⁻), thiocyanate ions (SCN⁻), and combinations thereof.

9. A biological analysis device (100) being any one of a microfluidic device,
a microfluidic cartridge, a lab-on-a chip, and a lab-on-a disc, for detecting or analyzing a biomolecule from a biological sample, the biological analysis device comprising:
a plurality of chambers (110, 120, 130, 140, 150, 160, 170) for processing, removing, or reacting a sample;
a liquid medium contained in the plurality of chambers, wherein the liquid medium comprises molecules that hydrogen bond with one another; and
anions having high charge density added to some of the plurality of chambers and interacting with the molecules of the liquid medium with a force that is stronger than the forces that produce hydrogen bonding between the molecules of the medium;
**characterized in that**
the anions having a high charge density are selected from the group consisting of sulfate ions (SO₄²⁻), hydrogen sulfate ions (HSO₄⁻), phosphate ions (PO₄³⁻), hydrogen phosphate ions (HPO₄²⁻), carbonate ions (CO₃²⁻), and a combination comprising at least one of the foregoing anions having a high charge density.

10. The biological analysis device (100) of claim 9, wherein the liquid medium is an organic material and the some of the plurality of chambers are surrounded by a jacket or bath containing a solution containing anions having a high charge density selected from the group consisting of citric acid ions (citrate3-), sulfate ions (SO₄³⁻), hydrogen sulfate ions (HSO₄⁻), phosphate ions (PO₄³⁻), hydrogen phosphate ions (HPO₄²⁻), carbonate ions (CO₃²⁻), hydrogen carbonate ions (HCO₃⁻) and a combination comprising at least one of the foregoing anions having a high charge density.

11. The biological analysis device of claim 9 or 10, wherein the chamber is any one of a lysis solution chamber (110) for storing a solution that lyses cells in a biological sample, and a elution solution chamber (160) for storing a solution that elutes a biomolecule from a solid material to which the biomolecule is bound.

12. The biological analysis device of claim 9 or 10, wherein the plurality of chambers comprise:
a lysis solution chamber (110) for storing a lysis solution which lyses cells in a biological sample;
a binding solution chamber (120) for storing a binding solution which binds biomolecules discharged from the lysed cells to a solid material;
a washing solution chamber (130) for storing a washing solution which removes biomolecules that are not bound to the solid material, by washing the solid material; and
an elution solution chamber (160) for storing an elution solution which elutes the biomolecules from the solid material to which the biomolecules are bound.

13. The biological analysis device of any one of claims 9 to 12, wherein the anions having high charge density are added to chambers that are required to be heated from among the plurality of chambers.

14. The biological analysis device of claim 13, wherein the chambers that are required to be heated are the lysis solution chamber and the elution solution chamber and / or wherein the chambers that are not required to be heated are the binding solution chamber and the washing solution chamber.

15. The biological analysis device of any one of claims 9 to 14, further comprising anions having low charge density, which are added to chambers that are not required to be heated from amongst the plurality of chambers.

16. The biological analysis device of claim 15, wherein the anions having low charge density comprise at least one selected from the group consisting of acetic acid ions (acetate-), chloride ions (Cl⁻), nitrate ions (NO₃⁻), bromide ions (Br⁻), chloric ions (ClO₃⁻), perchloric ions (ClO₄⁻), iodides (I⁻), thiocyanate ions (SCN⁻), and combinations thereof.

## Patentansprüche

1. Verfahren umfassend:
Zugeben von Anionen mit einer hohen Ladungsdichte zu einem flüssigen Medium, wobei das flüssige Medium Moleküle umfasst, welche Wasserstoffbindungen miteinander bilden; die Anionen mit den Molekülen des flüssigen Mediums mit einer Kraft interagieren, welche stärker ist, als die Kräfte, die die Wasserstoffbindung zwischen den Molekülen des Mediums erzeugen;
Abscheiden bzw. Einführen des flüssigen Mediums in eine Kammer einer biologischen Analyseeinrichtung, wobei die biologische Analyseeinrichtung eine ist aus einer Mikrofluid-Einrichtung, einer Mikrofluid-Kartusche, eines Lab-on-Chips und einer Lab-on-Disk;
Erwärmen der Kammer durch Erwärmen des flüssigen Mediums durch Bestrahlung desselben mit Mikrowellen;
**dadurch gekennzeichnet, dass** die Anionen mit einer hohen Ladungsdichte gewählt sind aus der Gruppe bestehend aus Sulfationen (SO₄²⁻), Wasserstoffsulfationen (HSO₄⁻), Phosphationen (PO₄³⁻), Wasserstoffphophationen (HPO₄²⁻), Carbonationen (CO₃²⁻) und einer Kombination umfassend wenigstens eines der vorangehenden Anionen mit einer hohen Ladungsdichte.

2. Verfahren nach Anspruch 1, wobei das flüssige Medium eines umfasst aus Wasser, einer wässrigen Lösung, organischem Lösungsmittel, einer Pufferlösung oder einer Kombination dieser.

3. Verfahren nach einem der Ansprüche 1 bis 2, wobei die Anionen mit hoher Ladungsdichte in einer Konzentration von ungefähr 100 Millimol (mM) bis ungefähr 2 Mol (M) zugegeben werden.

4. Verfahren nach einem der Ansprüche 1 bis 3, wobei die Mikrowellen eine Frequenz von ungefähr 300 MHz bis ungefähr 30 GHz aufweisen.

5. Verfahren nach einem der Ansprüche 1 bis 4, wobei die biologische Analyseeinrichtung eine Vielzahl von Kammern umfasst (110, 120, 130, 140, 150, 160, 170) um eine Probe zu verarbeiten, entfernen oder zu reagieren.

6. Verfahren nach einem der Ansprüche 1 bis 5, wobei die Anionen mit hoher Ladungsdichte zu Kammern von der Vielzahl von Kammern zugegeben werden, welche erwärmt werden müssen.

7. Verfahren nach Anspruch 5 oder 6, des Weiteren umfassend Anionen mit niedriger Ladungsdichte, welche zu Kammern von der Vielzahl von Kammern zugegeben werden, die nicht erwärmt werden müssen.

8. Verfahren nach Anspruch 7, wobei die Anionen mit niedriger Ladungsdichte wenigstens eines umfassen gewählt aus der Gruppe bestehend aus Essigsäureionen (Acetat), Chloridionen (Cl⁻), Nitrationen (NO₃⁻), Bromionen (Br⁻), Chlorionen (ClO₃⁻), Perchlorionen (ClO₄⁻), Iodide (I⁻), Thiocyanationen (SCN⁻) und deren Kombinationen.

9. Biologische Analyseeinrichtung (100), welche eine aus einer Mikrofluid-Einrichtung, einer Microfluidi-Kartusche, einem Lab-on-Chip und einer Lab-on-Disk ist, zur Ermittlung oder Analyse eines Biomoleküls aus einer biologischen Probe, wobei die biologische Analyseeinrichtung umfasst:
eine Vielzahl von Kammern (110, 120, 130, 140, 150, 160, 170) zur Verarbeitung, Entfernung oder zum Reagieren einer Probe;
ein flüssiges Medium, welches in der Vielzahl von Kammern enthalten ist, wobei das flüssige Medium Moleküle umfasst, welche Wasserstoffbindungen miteinander bilden; und
Anionen mit einer hohen Ladungsdichte, welche zu einigen der Vielzahl von Kammern zugegeben sind und mit den Molekülen des flüssigen Mediums interagieren, mit einer Kraft, die stärker ist als die Kraft, welche Wasserstoffbindungen zwischen den Molekülen des Mediums erzeugt; und
**dadurch gekennzeichnet, dass**
die Anionen mit einer hohen Ladungsdichte gewählt sind aus der Gruppe bestehend aus Sulfationen (SO₄²⁻), Wasserstoffsulfationen (HSO₄⁻), Phosphationen (PO₄³⁻), Wasserstoffphosphationen (HPO₄²⁻), Carbonationen (CO₃²⁻) und einer Kombination umfassend wenigstens eines der vorgenannten Anionen mit einer hohen Ladungsdichte.

10. Biologische Analyseeinrichtung (100) nach Anspruch 9, wobei das flüssige Medium ein organisches Material ist und einige der Vielzahl von Kammern von einer Ummantelung oder einem Bad umgeben sind, enthaltend eine Lösung enthaltend Anionen mit einer hohen Ladungsdichte, gewählt aus der Gruppe bestehend aus Zitronensäureionen (Citrat3-), Sulfationen (SO₄²⁻), Wasserstoffsulfationen (HSO₄⁻), Phosphationen (PO₄³⁻), Wasserstoffphosphationen (HPO₄²⁻), Carbonationen (CO₃²⁻), Wasserstoffcarbonationen (HCO₃⁻) und eine Kombination umfassend wenigstens eines der vorgenannten Anionen mit einer hohen Ladungsdichte.

11. Biologische Analyseeinrichtung nach Anspruch 9 oder 10, wobei die Kammer eine Kammer von einer Lysis-Solutions-Kkammer (110) zur Aufbewahrung einer Lösung, welche Zellen in einer biologischen Probe lysiert, und von einer Elutionskammer (160) ist, um eine Lösung aufzubewahren, welche ein Biomolekül aus einem festen Material eluiert, an welches das Biomolekül gebunden ist.

12. Biologische Analyseeinrichtung nach Anspruch 9 oder 10, wobei die Vielzahl von Kammern umfasst:
eine Lysis-Solution-Kammer (110), um eine Lysis-Solution aufzubewahren, welche Zellen in einer biologischen Probe lysiert;
eine Verbundlösungskammer (binding solution chamber) (120), um eine Verbundlösung aufzubewahren, welche Biomoleküle, die von den lysierten Zellen an ein festes Material abgegeben wurden, bindet;
eine Waschlösungskammer (13), um eine Waschlösung aufzubewahren, welche Biomoleküle, die nicht an ein festes Material gebunden sind, entfernt, indem das feste Material gewaschen wird; und
eine Elutionslösungskammer (160), um eine Elutionslösung aufzubewahren, welche die Biomoleküle aus dem festen Material, an welches die Biomoleküle gebunden sind, eluiert.

13. Biologische Analyseeinrichtung nach einem der Ansprüche 9 bis 12, wobei die Anionen mit hoher Ladungsdichte zu Kammern von der Vielzahl von Kammern zugegeben werden, welche erwärmt werden müssen.

14. Biologische Analyseeinrichtung nach Anspruch 13, wobei die Kammern, welche erwärmt werden müssen, Lysis-Solution-Kammern und die Elutionslösungskammenr sind und/oder wobei die Kammern, welche nicht erwärmt werden müssen, die Verbundlösungskammer und die Waschlösungskammer sind.

15. Biologische Analyseeinrichtung nach einem der Ansprüche 9 bis 14, des Weiteren umfassend Anionen mit niedriger Ladungsdichte, welche zu den Kammern von der Vielzahl von Kammern zugegeben werden, welche nicht erwärmt werden müssen.

16. Biologische Analyseeinrichtung nach Anspruch 15, wobei die Anionen mit niedriger Ladungsdichte wenigstens eines umfassen gewählt aus der Gruppe bestehend aus Essigsäureionen (Acetat-), Chlorionen (Cl⁻), Nitrationen (NO₃⁻), Bromionen (Br⁻), Chlorionen (ClO₃⁻), Perchlorionen (ClO₄⁻), Iodide (I⁻), Thiocyanationen (SCN⁻) und deren Kombinationen.

## Revendications

1. Procédé comprenant :
l'ajout d'anions ayant une densité de charge élevée à un milieu liquide; le milieu liquide comprenant des molécules qui se lient les unes aux autres par liaison hydrogène ; les anions interagissant avec les molécules du milieu liquide avec une force qui est supérieure aux forces qui produisent une liaison hydrogène entre les molécules du milieu ;
la mise en place du milieu liquide dans une chambre d'un dispositif d'analyse biologique, le dispositif d'analyse biologique étant l'un quelconque parmi un dispositif microfluidique, une cartouche microfluidique, un laboratoire sur puce (LOC), et un laboratoire sur disque (LOD) ; et
le chauffage de la chambre par chauffage du milieu liquide par irradiation de celui-ci avec des micro-ondes ;
**caractérisé en ce que**
les anions ayant une densité de charge élevée sont choisis dans le groupe constitué des ions sulfate (SO₄²⁻) , des ions hydrogénosulfate (HSO₄⁻), des ions phosphate (PO₄³⁻), des ions hydrogénophosphate (HPO₄²⁻) , des ions carbonate (CO₃²⁻), et d'une combinaison comprenant au moins un des anions précédents ayant une densité de charge élevée.

2. Procédé selon la revendication 1, dans lequel le milieu liquide comprend l'un quelconque parmi l'eau, une solution aqueuse, un solvant organique, une solution tampon, ou une combinaison de ceux-ci.

3. Procédé selon l'une des revendications 1 à 2, dans lequel les anions ayant une densité de charge élevée sont ajoutés à une concentration d'environ 100 millimolaire (mM) à environ 3 molaire (M).

4. Procédé selon l'une des revendications 1 à 3, dans lequel les micro-ondes ont une fréquence d'environ 300 MHz à environ 30 GHz.

5. Procédé selon l'une quelconque des revendications 1 à 4, dans lequel le dispositif d'analyse biologique comprend une pluralité de chambres (110, 120, 130, 140, 150, 160, 170) pour le traitement, le retrait, ou la mise en réaction d'un échantillon.

6. Procédé selon l'une quelconque des revendications 1 à 5, dans lequel les anions ayant une densité de charge élevée sont ajoutés à des chambres qui nécessitent d'être chauffées parmi la pluralité des chambres.

7. Procédé selon la revendication 5 ou 6, comprenant en outre des anions ayant une faible densité de charge, qui sont ajoutés à des chambres qui ne nécessitent pas d'être chauffées parmi la pluralité des chambres.

8. Procédé selon la revendication 7, dans lequel les anions ayant une faible densité de charge comprennent au moins un anion choisi dans le groupe constitué des ions acide acétique (acétate-), des ions chlorure (Cl⁻), des ions nitrate (NO₃⁻), des ions bromure (Br⁻), des ions chlorate (ClO₃⁻), des ions perchlorate (ClO₄⁻), des iodures (I⁻), des ions thiocyanate (SCN⁻), et des combinaisons de ceux-ci.

9. Dispositif d'analyse biologique (100) qui est l'un quelconque parmi un dispositif microfluidique, une cartouche microfluidique, un laboratoire sur puce (LOC), et un laboratoire sur disque (LOD), pour détecter ou analyser une biomolécule d'un échantillon biologique, le dispositif d'analyse biologique comprenant :
une pluralité de chambres (110, 120, 130, 140, 150, 160, 170) pour le traitement, le retrait, ou la mise en réaction d'un échantillon ;
un milieu liquide contenu dans la pluralité de chambres, le milieu liquide comprenant des molécules qui se lient les unes aux autres par liaison hydrogène ; et
des anions ayant une densité de charge élevée ajoutés à quelques chambres de la pluralité de chambres et interagissant avec les molécules du milieu liquide avec une force qui est supérieure aux forces qui produisent une liaison hydrogène entre les molécules du milieu ;
**caractérisé en ce que**
les anions ayant une densité de charge élevée sont choisis dans le groupe constitué des ions sulfate (SO₄²⁻), des ions hydrogénosulfate (HSO₄⁻), des ions phosphate (PO₄³⁻), des ions hydrogénophosphate (HPO₄²⁻), des ions carbonate (CO₃²⁻), et d'une combinaison comprenant au moins un des anions précédents ayant une densité de charge élevée.

10. Dispositif d'analyse biologique (100) selon la revendication 9, dans lequel le milieu liquide est une matière organique et les quelques chambres de la pluralité de chambres sont entourées d'une chemise ou d'un bain contenant une solution contenant des anions ayant une densité de charge élevée choisis dans le groupe constitué des ions acide citrique (citrate3-), des ions sulfate (SO₄²⁻), des ions hydrogénosulfate (HSO₄⁻), des ions phosphate (PO₄³⁻), des ions hydrogénophosphate (HPO₄²⁻), des ions carbonate (CO₃²⁻), des ions hydrogénocarbonate (HCO₃⁻), et d'une combinaison comprenant au moins un des anions précédents ayant une densité de charge élevée.

11. Dispositif d'analyse biologique selon la revendication 9 ou 10, dans lequel la chambre est l'une quelconque parmi une chambre de solution de lyse (110) conçue pour stocker une solution qui lyse les cellules dans un échantillon biologique, et une chambre de solution d'élution (160) conçue pour stocker une solution qui élue une biomolécule à partir d'un matériau solide auquel est liée la biomolécule.

12. Dispositif d'analyse biologique selon la revendication 9 ou 10, dans lequel la pluralité de chambres comprend :
une chambre de solution de lyse (110) conçue pour stocker une solution de lyse qui lyse les cellules dans un échantillon biologique ;
une chambre de solution de liaison (120) conçue pour stocker une solution de liaison qui lie les biomolécules libérées par les cellules lysées à un matériau solide ;
une chambre de solution de lavage (130) conçue pour stocker une solution de lavage qui élimine les biomolécules qui ne sont pas liées au matériau solide, par lavage du matériau solide ; et
une chambre de solution d'élution (160) conçue pour stocker une solution d'élution qui élue les biomolécules à partir du matériau solide auquel sont liées les biomolécules.

13. Dispositif d'analyse biologique selon l'une quelconque des revendications 9 à 12, dans lequel les anions ayant une densité de charge élevée sont ajoutés à des chambres qui nécessitent d'être chauffées parmi la pluralité des chambres.

14. Dispositif d'analyse biologique selon la revendication 13, dans lequel les chambres qui nécessitent d'être chauffées sont la chambre de solution de lyse et la chambre de solution d'élution et/ou dans lequel les chambres qui ne nécessitent pas d'être chauffées sont la chambre de solution de liaison et la chambre de solution de lavage.

15. Dispositif d'analyse biologique selon l'une quelconque des revendications 9 à 14, comprenant en outre des anions ayant une faible densité de charge, qui sont ajoutés à des chambres qui ne nécessitent pas d'être chauffées parmi la pluralité des chambres.

16. Dispositif d'analyse biologique selon la revendication 15, dans lequel les anions ayant une faible densité de charge comprennent au moins un anion choisi dans le groupe constitué des ions acide acétique (acétate-), des ions chlorure (Cl⁻), des ions nitrate (NO₃⁻), des ions bromure (Br⁻), des ions chlorate (ClO₃⁻), des ions perchlorate (ClO₄⁻), des iodures (I⁻), des ions thiocyanate (SCN⁻), et des combinaisons de ceux-ci.
